# NEUE EUROPÄISCHE PATENTSCHRIFT

(11) **EP 0 253 999 B2**
(45) Veröffentlichungstag und Bekanntmachung des Hinweises auf die Entscheidung über den Einspruch: **16.07.1997**
(45) Hinweis auf die Patenterteilung: 17.03.1993
(21) Anmeldenummer: 87108035.4
(22) Anmeldetag: 03.06.1987
(51) Int. Cl.: H02K 7/116

(54) **Elektroantrieb**
Electric motor drive unit
Mécanisme d'entraînement électrique

(30) Priorität: 18.06.1986 DE 3620363
(43) Veröffentlichungstag der Anmeldung: 27.01.1988
(73) Patentinhaber: Magnet-Motor Gesellschaft für magnetmotorische Technik mbH, D-82319 Starnberg (DE)
(72) Erfinder: Heidelberg, Götz, Dipl.-Phys., D-8136 Percha (DE)
(74) Vertreter: Klunker . Schmitt-Nilson . Hirsch

(56) Entgegenhaltungen:
- EP-A- 0 052 344
- EP-A- 0 096 468
- DE-A- 2 005 047
- DE-A- 3 032 587
- DE-C- 311 310
- DE-U- 8 513 219
- US-A- 2 514 460
- US-A- 3 115 204
- US-A- 4 274 023

## Beschreibung

Gegenstand der Erfindung ist ein elektrischer Kraftfahrzeugantrieb, wie er in Anspruch 1 angegeben ist.

Aus der US-A-2 514 460 ist ein elektrischer Kraftfahrzeugantrieb bekannt, mit einem Elektromotor mit einem inneren Hohlraum, in dem ein an den Rotor des Elektromotors angeschlossenes Planetengetriebe untergebracht ist. Bei diesem Antrieb ist sowohl ein mit dem anzutreibenden Rad verbundener, mit Wicklungen bestückter erster Motorteil als auch ein innerhalb des ersten Motorteils angeordneter, als Anker dienender zweiter Motorteil als rotierendes Bauteil ausgebildet. Zwischen den beiden Motorteilen befindet sich das Planetengetriebe, das in dem inneren Hohlraum untergebracht ist.

Aus dem DE-U-85 13 219 ist eine Elektromotor -Getriebe- Einheit bekannt, bei der ein zweistufiges Planetengetriebe in einem inneren Hohlraum des Elektromotors untergebracht ist und die die Merkmale (a), (c) mit Ausnahme der Lagerung der Rotorwelle an dem Planetenradträger, (d) mit Ausnahme des Teilmerkmals, daß das Hohlradteil die Abtriebsseite des Planetengetriebes darstellt, und (e) des Anspruchs 1 aufweist.

Aus der DE-C-33 11 310 ist eine Anordnung aus einer elektrischen Maschine, einer Strömungsmaschine und einem zwischengeschalteten Planetengetriebe bekannt. Der Planetenradträger ist stillstehend and dem Gehäuse des Planetengetriebes befestigt. Wenn man die Situation betrachtet, daß die Welle der Strömungsmaschine die eintreibende Seite des Planetengetriebes darstellt, bildet dort das Hohlradteil die Abtriebsseite des Planetengetriebes.

Aus der US-A-4 274 023 ist ein Elektroantrieb mit Planetengetriebe bekannt, bei dem an der Innenwand eines an den Enden geschlossenen zylindrischen Gehäuses Statorwicklungen angeordnet sind. die Rotorwicklungen eines Innenrotors gegenüberliegen. Im Inneren des Rotors befindet sich eine Planetengetriebeanordnung.

Der Erfindung liegt die Aufgabe zugrunde, einen besonders kompaktbauenden elektrischen Kraftfahrzeugantrieb verfügbar zu machen.

Eine vorteilhafte Ausgestaltung der Erfindung ist in Anspruch 2 angegeben.

Die Bezeichnung "wesentlicher Teil" bedeutet hier, daß im Vergleich zu der herkömmlichen Anordnung des angeschlossenen Getriebes axial neben dem Elektromotor wesentlich an Platz außerhalb des Elektromotors eingespart wird.

Es ist mindestens eine Stufe des mehrstufigen Planetengetriebes in dem inneren Hohlraum des Elektromotors untergebracht. Man kann auch das gesamte Getriebe oder nahezu das gesamte Getriebe in dem Hohlraum unterbringen.

Das Planetengetriebe mit mindestens einer wahlweise ein- und ausschaltbaren Planetenstufen kann z.B. ein Getriebe nach Art der bekannten Automatikgetriebe für Kraftfahrzeuge sowie ein Getriebe mit einem als Planetensatz ausgebildeten "Overdrive" sein.

Die günstigsten Voraussetzungen zur Schaffung des inneren Hohlraums bieten Elektromotoren, bei denen die sogenannte Wirkfläche, also der in der Regel zylindrische Luftspaltbereich zwischen dem Rotor und dem Stator, einen großen Durchmesser aufweist. Derartige Elektromotoren sind in der Praxis nicht weit verbreitet. Nach einer im Zusammenhang mit der Erfindung besonders bevorzugten Konstruktion handelt es sich um einen Elektromotor derjenigen Bauart, bei der der Rotor mit Dauermagneten wechselnder Polung und der Stator mit elektronisch umschaltgesteuerten Wicklungen besetzt ist oder umgekehrt, wobei das Dauermagnetmaterial ein möglichst niedriges µᵣ aufweisen kann, insbesondere im Bereich von µᵣ = 1 bis 3. Besonders bevorzugt sind Elektromotoren mit Außenrotor in Synchronbauart. Elektromotoren der vorstehend geschilderten Art lassen sich mit Wirkflächen mit großem Durchmesser bauen.

Die Erfindung und Weiterbildungen der Erfindung werden im folgenden anhand eines schematisiert dargestellten Ausführungsbeispiels noch näher erläutert, wobei allerdings eine ein- und ausschaltbare Planetenstufe, wie sie gemäß Anspruch 1 vorgesehen ist, hier nicht vorhanden ist :

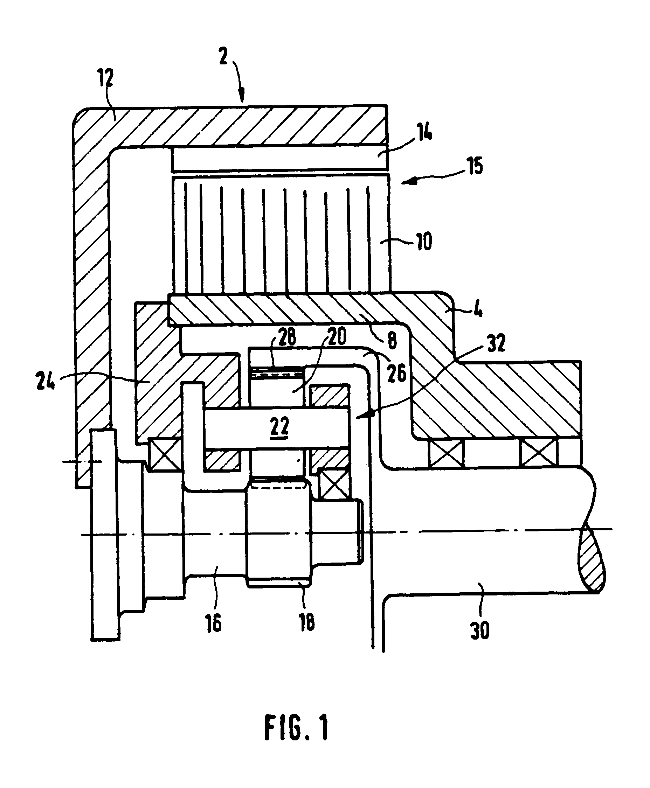

- Fig. 1: zeigt ein Elektroantrieb im Schnitt, wobei aus Übersichtlichkeitsgründen die analog ausgebildete, untere Hälfte weggelassen ist.

Man erkennt in Figur 1 ein stillstehendes, zylindrisches Basisteil 4 des Elektroantriebs 2, das einen nach links ragenden, hohlzylindrischen Fortsatz 8 hat. Am Außenumfang des Fortsatzes 8 sind zylindrische Statorpole befestigt, die mit nicht eingezeichneten Wicklungen den Stator 10 des Elektromotors 2 bilden. Der Rotor 12 des Elektromotors 2 ist an einer Stirnseite offen und im wesentlichen zylindrisch-topfförmig gestaltet. Am Innenumfang der Umfangswand des Rotors 12 sind Dauermagnete 14 umfangsmäßig mit abwechselnder Polung verteilt befestigt. Die Dauermagnete 14 liegen dem Stator 10 mit zylindrischem Luftspalt gegenüber.

Im Zentrum der axialen Begrenzungswand des Rotor-Topfes ist eine Welle 16 derart befestigt, daß sie axial in den inneren Hohlraum des Elektromotors 2 ragt. Dieser Hohlraum befindet sich im Inneren des linken Fortsatzes 8 des Basisteils 4 und auch noch ein Stück axial links daneben.

Die Welle 16, die sich gemeinsam mit dem Rotor 12 dreht, ist in einem Axialbereich mit einer Ritzelverzahnung 18 versehen. Die Ritzelverzahnung 18 kämmt mit mehreren, umfangsmäßig verteilten Planetenrädern 20. Die Planetenräder 20 sind mittels Bolzen 22 in einem Planetenradträger 24 gelagert, der an seinem linken Axialende zu einem größeren Durchmesser geführt und dort mit dem linken Stirnende des Fortsatzes 8 des Basisteils 4 fest verbunden ist, so daß der Planetenradträger 24 gemeinsam mit dem Basisteil 4 stillsteht. Der Planetenradträger 24 dient zugleich mit Bereichen seines Innenumfangs der Lagerung der Welle 16 und somit des gesamten Rotors 12.

Ferner ist ein Hohlradteil 26 vorgesehen, das im linken Bereich topfförmig mit einer Innenverzahnung 28 und im rechten Bereich als Welle 30 augebildet ist. Die am zylindrischen Innenumfang des Topfbereichs des Hohlradteils 26 vorgesehene Verzahnung 28 kämmt mit den Planetenrädern 20. Über die Welle 30 wird das Drehmoment aus dem Elektroantrieb axial nach rechts herausgeführt. Die Welle 30 ist in dem Basisteil 4 gelagert.

Man erkennt, daß das gesamte beschriebene Planetengetriebe 32 im Inneren des Elektromotors 15 untergebracht ist und daß die Lagerung des Rotors 12 mittels der Lagerung der Getriebewelle 16 erfolgt.

Das Basisteil kann, wenn erforderlich, zu einem vollständigen Gehäuse um den Rotor herum komplettiert werden.

## Patentansprüche

1. Elektrischer Kraftfahrzeugantrieb (2) mit mindestens einem Elektromotor (15) mit einem inneren Hohlraum, in dem mindestens ein wesentlicher Teil eines an den Rotor (12) des Elektromotors (15) angeschlossenen Planetengetriebes (32) untergebracht ist, aufweisend folgende Merkmale:
(a) der Elektromotor (15) weist ein Basisteil (4) mit dem inneren Hohlraum auf, das an seinem Außenumfang den Stator (10) des Elektromotors (15) trägt;
(b) der Planetenradträger (24) des Planetengetriebes (32) ist stillstehend an dem Basisteil (4) des Elektromotors (15) befestigt;
(c) der Rotor (12) des Elektromotors (15) ist als topfförmiger Außenrotor ausgebildet und mit einer Welle (16) verbunden, die an dem Planetenradträger (24) des Planetengetriebes (32) gelagert ist;
(d) die Planetenräder (20) des Planetengetriebes (32) kämmen innen mit einer der Welle (16) zugeordneten Ritzelverzahnung (18) und außen mit der Innenverzahnung (28) eines Hohlradteils (26), das die Abtriebsseite des Planetengetriebes (32) darstellt;
(e) das Planetengetriebe (32) ist mehrstufig, wobei mindestens eine Stufe in dem Hohlraum untergebracht ist;
(f) das Planetengetriebe (32) weist mindestens eine ein- und ausschaltbare Planetenstufe auf.

2. Antrieb nach Anspruch 1,
dadurch gekennzeichnet, daß ein Elektromotor (15) derjenigen Bauart vorgesehen ist, bei der der Stator (10) mit elektronisch umschaltgesteuerten Wicklungen besetzt ist und, vorzugsweise, der Rotor (12) mit Dauermagneten (14) besetzt ist.

## Claims

1. An electric motor vehicle drive (2) comprising at least one electric motor (15) having an inner cavity accommodating at least a substantial part of a planetary gear system (32) connected to the rotor (12) of the electric motor (15),
comprising the following features:
(a) the electric motor (15) comprises a base member (4) having said inner cavity and carrying the stator (10) of the electric motor (15) on its outer circumference;
(b) the planet carrier (24) of said planetary gear system (32) is mounted to the base member (4) of the electric motor (15) in stationary manner;
(c) the rotor (12) of the electric motor (15) is in the form of a pot-shaped external rotor and connected to a shaft (16) supported on the planet carrier (24) of said planetary gear system (32);
(d) the planet wheels (20) of said planetary gear system (32) mesh internally with pinion teeth (18) associated with said shaft (16) and externally with the internal teeth (28) of a ring gear member (26) constituting the drive output side of the planetary gear system (32);
(e) the planetary gear system (32) is of multi-stage design, with at least one stage being accommodated in said cavity;
(f) the planetary gear system (32) comprises at least one activatable and deactivatable planet stage.

2. A drive according to claim 1,
characterized in that an electric motor (15) of such construction is provided in which the stator (10) is equipped with coils controlled electronically with respect to switching and, preferably, the rotor (12) is equipped with permanent magnets (14).

## Revendications

1. Dispositif d'entraînement électrique (2) pour véhicule automobile, comportant au moins un moteur électrique (15) avec une cavité intérieure dans laquelle est logée au moins une partie essentielle d'un engrenage planétaire (32), relié au rotor (12) du moteur électrique (15), comportant les caractéristiques suivantes :
a) le moteur électrique (15) comporte un élément de base (4) avec la cavité intérieure qui porte, sur son pourtour extérieur, le stator (10) du moteur électrique (15) ;
b) le porte-satellites (24) de l'engrenage planétaire (32) est immobilisé sur l'élément de base (4) du moteur électrique (15) ;
c) le rotor (12) du moteur électrique (15) est conçu sous la forme d'un rotor extérieur en forme de pot et est relié à un arbre (16) qui est monté sur le porte-satellites (24) de l'engrenage planétaire (32) ;
d) les pignons satellites (20) de l'engrenage planétaire (32) engrènent à l'intérieur avec une denture de pignon (18), associée à l'arbre (16) et à l'extérieur avec la denture intérieure (28) d'une partie de roue creuse (26) qui constitue le côté sortie de l'engrenage planétaire (32);
(e) l'engrenage planétaire (32) comporte plusieurs étages, un étage au moins étant logé dans la cavité.
(f) l'engrenage planétaire (32) comporte au moins un étage pouvant être enclenché et désenclenché.

2. Dispositif d'entraînement électrique selon la revendication 1, caractérisé en ce qu'il est prévu un moteur électrique (15) du type pour lequel le stator (10) comporte des enroulements commutés électroniquement et, de préférence, le rotor (12) comporte des aimants permanents (14).
